# EUROPÄISCHE PATENTSCHRIFT

(11) **EP 0 423 281 B1**
(45) Veröffentlichungstag und Bekanntmachung des Hinweises auf die Patenterteilung: **17.03.1993**
(21) Anmeldenummer: 90906210.1
(22) Anmeldetag: 24.04.1990
(51) Int. Cl.: E04F 15/08, E04F 13/14

(54) **PLATTENBELAG**
SLAB LINING
REVETEMENT A DALLES

(30) Priorität: 25.04.1989 EP 89107410
(43) Veröffentlichungstag der Anmeldung: 24.04.1991
(73) Patentinhaber: Rundmund, Theo, Dipl.-Bauing.,, D-48683 Ahaus (DE)
(72) Erfinder: Rundmund, Theo, Dipl.-Bauing.,, D-48683 Ahaus (DE)
(74) Vertreter: Schulze Horn, Stefan, Dipl.-Ing. M.Sc.
(86) Internationale Anmeldenummer: EP9000657
(87) Internationale Veröffentlichungsnummer: WO9012936

(56) Entgegenhaltungen:
- EP-A- 0 253 042
- EP-A- 0 263 587
- DE-A- 2 348 301
- DE-A- 2 547 637
- DE-C- 119 766
- DE-U- 8 905 179
- GB-A- 2 032 485
- GB-A- 2 090 307
- J.R. Panek et al.: "Construction sealants and adhesives", 2 edition, 1984, John Wiley & Sons, Inc. (New York, US) pages 270,271, "The nature of adhesion", see page 270, paragraph 2; page 271, paragraph 2

## Beschreibung

Die Erfindung betrifft einen Plattenbelag, insbesondere für eine flüssigkeitsdichte und/oder säure- bzw. laugenfeste Boden- und Wandauskleidung.

Ein Plattenbelag für den genannten Verwendungszweck ist beispielsweise aus der DE-PS 23 48 301 bekannt. Bei diesem Belag liegen die Platten ebenfalls in einem Klebmassebett, wobei während der Herstellung des Belages durch mechanisches Einrütteln der Platten für einen vollflächigen Kontakt zwischen der Klebmasse einerseits und der Plattenunterseite sowie den Plattenflanken andererseits gesorgt werden soll. Um eine hohe Tragfähigkeit und gute Ebenflächigkeit des fertigen Belages zu gewährleisten und um das erwähnte mechanische Einrütteln ohne Verschieben der Platten zu ermöglichen, werden die Platten knirschverlegt, was sehr enge Fugen ergibt. Dies ist einerseits zwar erwünscht, führt jedoch andererseits in der Praxis dazu, daß ein Teil der Fugen des Belages nicht oder nur unvollständig mit der Klebmasse gefüllt ist, weil die Klebmasse an einem Aufsteigen von unten in die Fugen gehindert ist. Hierdurch werden Nacharbeiten erforderlich, die jedoch meist nicht die erforderliche Qualität erreichen, da es sehr schwierig ist, enge Fugen von oben vollständig zu füllen. Hinzu kommt erschwerend, daß die Schwach- und Fehlstellen der Fugenfüllung nicht ohne weiteres erkennbar sind. Der Belag kann dadurch von Anfang an undicht sein oder frühzeitig undicht werden sowie eine verminderte mechanische Belastbarkeit, insbesondere bei thermischer Wechselbelastung und bei Einwirkung tangentialer Kräfte, aufweisen.

Aus der DE-PS 119 766 ist ein Kunststein oder eine künstliche Platte zur Herstellung von Wand- und Deckenverkleidungen, Pflaster und dergleichen bekannt. Diese Platte weist an den Seiten nach innen erweiterte, die Plattendicke nicht ganz durchsetzende Höhlungen oder vorstehende Lappen auf, in welche beim Eindrücken in die aus erhärtendem Material bestehende Unterlage diese Grundmasse eintritt, so daß deren Erhärtung die Platten nicht nur mit ihrer Unterlage, sondern auch untereinander fest verbunden sind. Bei den Höhlungen handelt es sich entweder um durchgehende, langgestreckte Vertiefungen oder eine Aneinanderreihung von einigen wenigen, miteinander fluchtenden länglichen Vertiefungen, deren Längsachsen parallel zu den Seitenflanken der Platte verlaufen. Dabei können in Schnittrichtungen senkrecht zur Plattenoberseite betrachtet die Höhlungen schwalbenschwanzförmig ausgebildet sein. Die alternativ vorgesehenen vorstehenden Lappen haben in Aufsicht auf die Platte betrachtet einen trapezförmigen Umriß, wobei die Basis, d. h. die breite Seite, stets der zugehörigen Platte zugewandt ist. Mit den beschriebenen Maßnahmen wird zwar eine Vergrößerung der Plattenflanken-Oberfläche im Fugenbereich erreicht, jedoch kann es hier immer noch relativ leicht zu Abrissen der Fugenfüllung von den Plattenflanken und damit zu Undichtigkeiten kommen, insbesondere, wenn der aus diesen Platten bestehende Boden- oder Wandbelag hohen mechanischen und/oder thermischen Wechselbelastungen unterliegt. Außerdem ist es bei derartigen Platten kaum möglich, die Höhlungen wirklich vollständig mit der Grundmasse bzw. dem Material des Klebstoffbettes zu füllen, weil eine Luftverdrängung aus den Höhlungen während des Verlegens und/oder Verfugens der Platten nicht sichergestellt ist. Hierdurch verbleiben Hohlräume, sogenannte Lunker, in der Klebmasse des Klebstoffbettes bzw. der Fugenfüllung.

Aus der GB-A-20 32 485 ist ein Plattenbelag bekannt, bestehend aus Platten mit einem mehreckigen Umriß, die jeweils eine flache Oberseite, eine flache oder strukturierte, in ein Klebmassebett eingelegte Unterseite und im wesentlichen senkrecht zur Oberseite verlaufende Plattenflanken aufweisen, wobei die Flanken benachbarte Plattenfugen begrenzen, welche ebenfalls mit der Klebmasse von unten her mit Fugenfüllmasse gefüllt sind, wobei die Plattenflanken mit einer oberflächenvergrössernden und einen Durchtritt der Klebmasse bzw. der Fugenfüllmasse durch die Fuge erlaubenden Strukturierung versehen sind, wobei die Strukturierung aus einer Vielzahl von direkt nebeneinander angeordneten, als Abstandshaltern dienenden Vorsprüngen besteht, welche zueinander parallele, im wesentlichen senkrecht zur Oberseite der Platte verlaufende Längsachsen aufweisen.

Nachteilig ist bei der GB-A-20 32 485, daß durch die Abstandshalter kein fester Verbund des Plattenbelages herstellbar ist.

Aus der GB-A-20 90 307 ist eine keramische Platte mit als Abstandshalter dienenden Vorsprüngen bekannt, wobei sich die Abstandshalter über jeweils die gesamte Länge der Plattenkante erstrecken. Dabei hat jeder Abstandshalter mindestens zwei symmetrisch angeordnete kleinere Abschnitte größter Breite, die in den übrigen Abstandshaltern in Form von Kurven übergehen, die sich zu Abschnitten kleinster Breite erstrecken, so daß der Abstandshalter gerade erscheint und die Breitenänderung nicht ins Auge fallen. Die keramische Platte ist in der Mitte, an der Kante und in Ecken eines Plattenbelages einsetzbar.

Nachteilig ist auch bei der Platte nach GB-A-20 90 307, daß durch die Form der Abstandshalter kein fester Verbund des Plattenbelages herstellbar ist.

Es stellt sich daher die Aufgabe, einen Plattenbelag der eingangs genannten Art zu schaffen, der verbesserte Verlege- und Gebrauchseigenschaften aufweist, d. h. insbesondere einfach und doch lunkerfrei verlegbar ist, eine hohe und dauerhafte Dichtigkeit besitzt und hoch belastbar ist.

Die Lösung dieser Aufgabe gelingt erfindungsgemäß durch einen Plattenbelag der eingangs genannten Art mit den Merkmalen des Patentanspruchs 1.

Mit der Erfindung wird dafür gesorgt, daß auch bei einer die Verlegearbeiten stark vereinfachenden und beschleunigenden Knirschverlegung der Platten ein definierter Fugenraum bestehen bleibt, der sich bei der Herstellung des Plattenbelages zuverlässig mit Klebmasse füllt bzw. füllen läßt. Wegen des Wechsels von Vorsprüngen und Vertiefungen wird ein vollständiges Eindringen der Klebmasse auch in enge Fugenbereiche sichergestellt, weil die Klebmasse nicht nur von unten her, sondern auch seitwärts und damit auf sehr kurzen Wegen in die engen Fugenbereiche fließen kann. Dieser Fließvorgang kann noch durch vorheriges Benetzen von demzufolge auftretenden Kapillarkräfte gefördert werden. Die von der Plattenunterseite und aus den Fugen verdrängte Luft entweicht ohne besondere Maßnahmen problemlos und ungehindert zur Oberseite des Plattenbelages, so daß Lunker unter dem Belag im Klebmassebett und in den Fugen in der Fugenfüllmasse vermieden werden. Der Plattenbelag wird dadurch bei einfacher und rascher Verlegung qualitativ hochwertig und zuverlässig dicht, ohne daß bei seiner Herstellung eine neue, besodere Arbeitsweise erforderlich wäre.

Bei geeignetem, in sich starrem Untergrund können bisher aus Sicherheitsgründen unter einem Plattenbelag zusätzlich verlegte Dicht- oder Drainageschichten bei dem neuen Plattenbelag sogar ganz entfallen. Durch die Ausgestaltung der Platten wird deren Herstellung relativ einfach gehalten. Zum Beispiel kann die Strukturierung der Flanken bei keramischen Platten schon bei deren Formung und damit vor dem Brennen der Platten erzeugt werden. Außer keramischen Platten können auch Platten aus Metall, Kohlenstoffmaterialien, Kunststoffen mit und ohne Füllstoffe oder auch aus natürlichen Materialien, wie Naturstein oder Holz verwendet werden.

Weiterhin wird mit der Erfindung die Haftung zwischen der Klebmasse und den Platten im Bereich der Plattenflanken und damit die Verbindung zwischen den benachbarten Platten wesentlich verbessert, so daß der Plattenbelag Belastungen mechanischer, thermischer und chemischer Art deutlich besser und länger standhalten kann. Undichtigkeiten infolge von Abrissen der Klebmasse von den Plattenflanken werden bei dem neuen Plattenbelag weitgehend ausgeschlossen. Der Plattenbelag bietet damit eine erhöhte Sicherheit gegen Undichtigkeit und eine verlängerte reparatur- und erneuerungsfreie Nutzungsdauer.

Um die Platten für den neuen Plattenbelag in Guß- oder Preßformen herstellen zu können, ist vorgesehen, daß die Platten konisch mit von unten nach oben betrachtet nach außen geneigten Flanken ausgebildet sind. Damit wird eine problemlose Entformbarkeit der Platten bei deren Herstellung erreicht. Außerdem ermöglicht die hierbei entstehende, nach unten hin offene Keilform der Fugen zwischen benachbarten Platten eine verbesserte, zuverlässigere Füllung der Fugen mit Fugenfüllmasse.

Weiter ist vorgesehen, daß die Vertiefungen in deren Längsachse gesehen in Richtung von oben nach unten sich konisch erweiternd und die Vorsprünge in derselben Richtung sich konisch verengend ausgebildet sind, wodurch ebenfalls die im vorangehenden Absatz erläuterten Vorteile erzielt werden.

Um die im allgemeinen immer noch von Hand erfolgende Verlegung der einzelnen Platten zu dem Plattenbelag möglichst einfach zu machen, ist vorteilhaft vorgesehen, daß die Plattenflanken in ihrer Längsrichtung gesehen konkav ausgebildet sind. Hierdurch wird erreicht, daß die einzelnen Platten nur im Bereich ihrer Ecken aneinanderstoßen, während sie über den wesentlichen Teil der Länge ihrer Flanken voneinander Abstand halten und so einen definierten Fugenraum bilden. Dabei genügt in der Praxis eine relativ geringe Wölbung, z. B. im Bereich von 1 bis 5 mm im Längsmittenbereich der Flanke gemessen.

Eine weitere Erfindungsausgestaltung, die ebenfalls dazu dient, das Verlegen der Platten zu dem Plattenbelag zu vereinfachen, besteht darin, daß auf den Flanken an oder neben den Plattenecken Abstandshalter in Form von Vorsprüngen angeordnet sind. Bei dieser Ausgestaltung stoßen die Platten nur im Bereich der Abstandshalter aneinander, während die Plattenflanken ansonsten Abstand voneinander halten und so wieder einen definierten Fugenraum bilden. Die Vorsprünge sind vorzugsweise einstückig mit der zugehörigen Platte und können außerdem in ihrer Höhe so begrenzt sein, daß sie nach einem Verfugen des Plattenbelages von oben nicht mehr sichtbar sind.

Eine vorteilhafte Verlegungform der Platten sieht vor, daß bei den einander zugewandten Plattenflanken zweier benachbarter Platten jeweils eine Vertiefung in der einen Flanke einer Vertiefung in der anderen Flanke bzw. jeweils ein Vorsprung in der einen Flanke einem Vorsprung in der anderen Flanke gegenüberliegt. Diese Verlegeform hat insbesondere den Vorteil, daß die Platten schnell und einfach verlegbar sind, wobei aber auch hier der besonders feste Zusammenhalt zwischen Plattenflanken und Fugenfüllmasse und damit zwischen den Platten untereinander gewährleistet bleibt.

Bevorzugt ist vorgesehen, daß die Vertiefungen im Schnitt parallel zur Plattenebene gesehen hinterschnitten sind. Bei dieser hinterschnittenen Ausführung wird infolge der gegenseitigen Verkrallung und Verzahnung ein besonders fester Zusammenhalt zwischen den Plattenflanken und der Fugenfüllmasse und damit zwischen benachbarten Platten erreicht. Der gesamte Plattenbelag erhält damit eine sehr hohe Stabilität und äußerst zuverlässige Dichtigkeit und Haltbarkeit.

Bevorzugte Umrißformen der Vertiefungen bzw. Vorsprünge sind in den Ansprüchen 6, 7 und 8 angegeben.

Hinsichtlich der Dimensionierung der Vorsprünge und Vertiefungen ist bei dem neuen Plattenbelag vorgesehen, daß das Verhältnis zwischen der Länge der in der Plattenebene verlaufenden Hauptachse der Platte einerseits und der Tiefe und Weite einer Vertiefung in der Plattenebene bzw. der horizontalen Länge und Breite eines Vorsprungs in der Plattenebene andererseits zwischen 10 : 1 und 200 : 1 beträgt. Relativ zu den Dimensionen der Platte sind damit die Vorsprünge und Vertiefungen klein, so daß sie nicht mehr Raum beanspruchen, als der bei herkömmlichen Plattenbelägen üblicherweise vorgesehene Fugenraum. Außerdem wird so die Anordnung einer vergleichsweise großen Zahl von Vorsprüngen bzw. Vertiefungen an jeder Plattenflanke ermöglicht. Weiterhin behält dadurch jede Platte den gewohnten Plattencharakter, nämlich bei Aufsicht eine von klaren Umrißlinien begrenzte geometrische Fläche zu bilden, z. B. ein Quadrat, ein Rechteck, ein Sechseck etc..

Um das äußere Erscheinungsbild des Plattenbelages im fertigen Zustand noch weiter an das herkömmliche Aussehen von Plattenbelägen anzupassen und um im Bereich des oberen Fugenabschlusses eine möglichst glatte und geradlinig begrenzte Oberfläche der Fugenfüllmasse zu erreichen, ist vorgesehen, daß die oberen, von den Flanken und der Oberseite gebildeten Kanten der Platten angefast ausgebildet sind, wobei die Erstreckung der Fase in Plattenebene gleich oder größer ist als die Tiefe der Vertiefungen in Plattenebene bzw. Länge der Vorsprünge in Plattenebene in den Flanken.

Vorzugsweise beträgt die Konizität der Platten zwischen 1 und 5 % der Plattendicke. Bei einer Plattendicke von z. B. 10 mm würde dies bedeuten, daß die Platte in der Ebene der Oberseite etwa 0,1 - 0,5 mm kleiner bzw. größer ist als in der Ebene ihrer Unterseite. Die Fuge zwischen zwei benachbarten derartigen Platten wäre dann oben 0,2 - 1,0 mm breiter als unten bzw. ungekehrt.

Zweckmäßig wird auch für den vorangehend beschriebenen neuen Plattenbelag als Klebmasse und/oder als Fugenfüllmasse, wie an sich bekannt, ein niedrig-viskoser Säurekitt auf Epoxydharz-, Polyester-, Phenolharz- oder Furanharz-Basis eingesetzt.

Aufgrund ihrer vorteilhaften Eigenschaften vor allem hinsichtlich Dichtigkeit und Haltbarkeit sind Plattenbeläge gemäß der vorliegenden Erfindung vielseitig verwendbar, z. B. in allen Anwendungsbereichen des Säureschutzbaus, der Säureschutztechnik und der Oberflächenschutztechnik. Hier ist insbesondere zu nennen der Bereich der Lebensmittel- und Getränkeindustrie sowie der chemischen Industrie. In letzterer eignen sich die Plattenbeläge u. a. für Auffangräume von Tanks sowie allgemein überall dort, wo chemisch resistente und/oder dichte Boden- und Wandbeläge gefordert werden. Hierzu gehört sowohl der gesamte Anwendungsbereich des Industriebaus und des Küchen- und Schlachthofbereiches als auch der private Anwendungsbereich, z. B. für Balkone, Terrassen, Bäder und Schwimmbecken, d. h. dort, wo Plattenbeläge mit Feuchtigkeit bzw. Flüssigkeiten in Berührung kommen.

Ausführungsbeispiele der Erfindung werden im folgenden anhand einer Zeichnung erläutert. Die Figuren der Zeichnung zeigen:
Figur 1 einen Plattenbelag in einer Teil-Aufsicht auf seine Oberseite,
Figur 2 den Plattenbelag in einem Teil-Schnitt parallel zu seiner Oberseite,
Figur 3 eine Platte des Plattenbelages in einer Teilansicht auf eine Plattenflanke,
Figuren 4, 5, und 6 jeweils den Plattenflankenbereich in drei weiteren Ausgestaltungen, in Darstellungen entsprechend Figur 2,
Figur 7 eine Platte im Teil-Querschnitt durch den Flankenbereich,
Figur 8 den Plattenbelag, bestehend aus Platten gemäß Figur 7 im Teilquerschnitt durch den Fugenbereich,
Figur 9 den Plattenbelag in einer weiteren Ausführung, wieder im Teilquerschnitt durch den Fugenbereich,
Figur 10 den Plattenbelag in einer Ausführung mit konkaven Flanken der Platten, in Aufsicht und
Figur 11 den Plattenbelag in einer Ausführung mit Abstandshaltern an den Plattenecken, ebenfalls in Aufsicht.

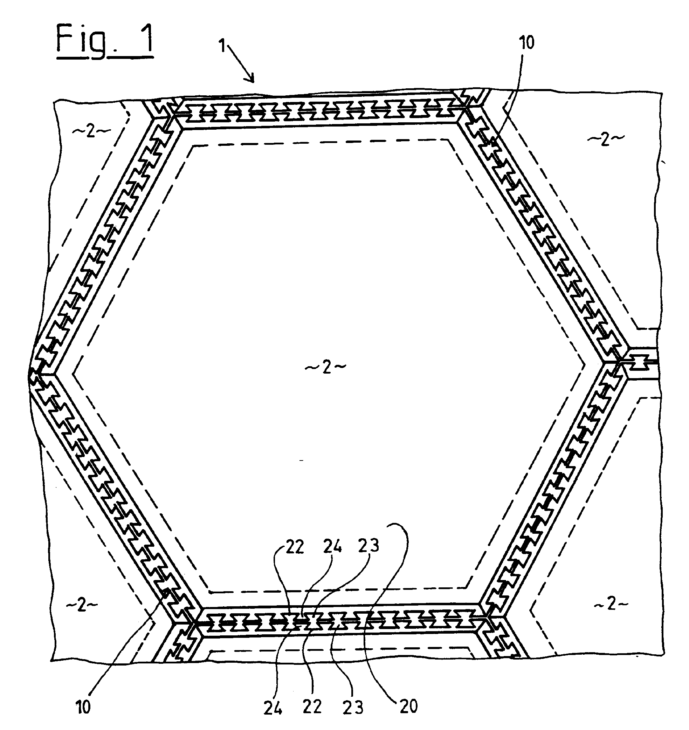

Wie die Figur 1 der Zeichnung zeigt, besteht das hier dargestellte erste Ausführungsbeispiel des Plattenbelages 1 aus sechseckigen Platten 2. Die Platten 2 sind mit ihrer hier nicht sichtbaren Unterseite in ein Klebmassebett eingelegt und stoßen entlang ihres Umfangs jeweils an eine benachbarte Platte 2. An ihren aufeinander zuweisenden Flanken 22 sind die Platten 2 mit einer Strukturierung versehen, die in dem in Figur 1 dargestellten Ausführungsbeispiel durch senkrecht zur Flankenlängsachse verlaufende schwalbenschwanzförmige Vertiefungen 23 und Vorsprünge 24 gebildet ist. Hierdurch werden Fugen 10 zwischen den Platten 2 gebildet, die die Form einer Kette von im Schnitt parallel zur Plattenebene gesehen flügelförmigen Aussparungen aufweisen. Zwischen jedem flügelförmigen Fugenbereich ist ein schmalerer Fugenbereich vorhanden. Bei der Herstellung des Plattenbelages 1 füllen sich diese Fugen 10 von unten her mit der zur Einbettung der Platten 2 dienenden Klebmasse, welche unter zusätzlicher seitlicher Ausbreitung auch in die engen Fugenbereiche gelangt. Alternativ oder ergänzend kann auch eine zusätzliche Fugenfüllmasse von oben her in die Fugen 10 eingebracht, z. B. eingegossen, eingeschlämmt oder eingepreßt werden.

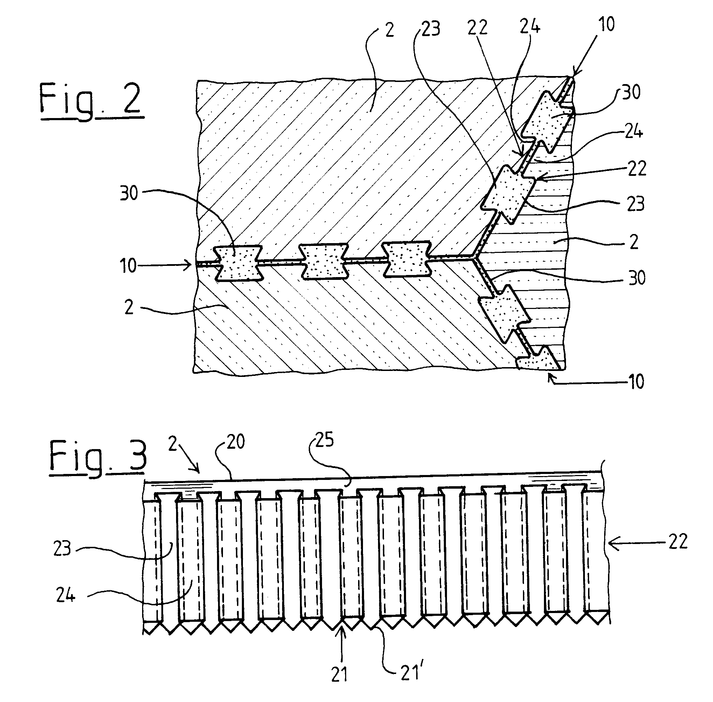

Aus Figur 2 ist besonders deutlich der Verlauf und die Form der Fugen 10 im Bereich des Aufeinandertreffens dreier Platten 2 erkennbar. Die Formgebung der Flanken 22 der einzelnen Platten 2 ist dabei so, daß jeweils eine Vertiefung 23 in der einen Platte 2 genau einer Vertiefung 23 in der benachbarten Platte 2 gegenüber liegt. Dementsprechend liegen jeweils auch zwei Vorsprünge 24 in benachbarten Platten 2 einander gegenüber.

Weiterhin zeigt die Figur 2 die Füllung der Fugen 10 mit der Klebmasse bzw. Fugenfüllmasse 30. Nach deren Erhärten sind die Platten 2 aufgrund der Hinterschneidungen der Vertiefungen 23 sehr fest miteinander verbunden. Im Unterschied zum ersten Ausführungsbeispiel nach Figur 1 sind hier die Ecken der Vertiefungen 23 und Vorsprünge 24 leicht ausgerundet, wodurch - in Abhängigkeit vom Material der Platten 2 - unter Umständen eine Vereinfachung der Herstellung der Platten 2 erreicht wird.

Aus der Teil-Seitenansicht auf die Flanke 22 der Platte 2 gemäß Figur 3 ist ersichtlich, daß die Vertiefungen 23 und Vorsprünge 24 parallel zueinander verlaufende Längsachsen aufweisen, die senkrecht zur Längsachse der Flanke 22 orientiert sind. Weiterhin zeigt die Figur 3, daß die Zahl der Vertiefungen 23 und Vorsprünge 24 im Verhältnis zu den Dimensionen der Platte 2 relativ groß ist.

Im Bereich der zwischen der Oberseite 20 und der Flanke 22 gebildeten Kante der Platte 2 ist eine Fase 25 ausgebildet, deren Erstreckung in Richtung parallel zur Oberseite 20 der Platte 2 so groß ist, daß sich die Vertiefungen 23 nicht bis zur Oberseite 20 erstrecken, sondern vorher enden.

An der Unterseite 21 der Platte 2 gemäß Figur 3 ist hier eine Strukturierung 21′ vorhanden, die aus einer der Zahl der Vertiefungen 23 plus Vorsprünge 24 entsprechenden Zahl von Rillen bzw. vorspringenden Streifen dreieckiger Querschnittsform besteht.

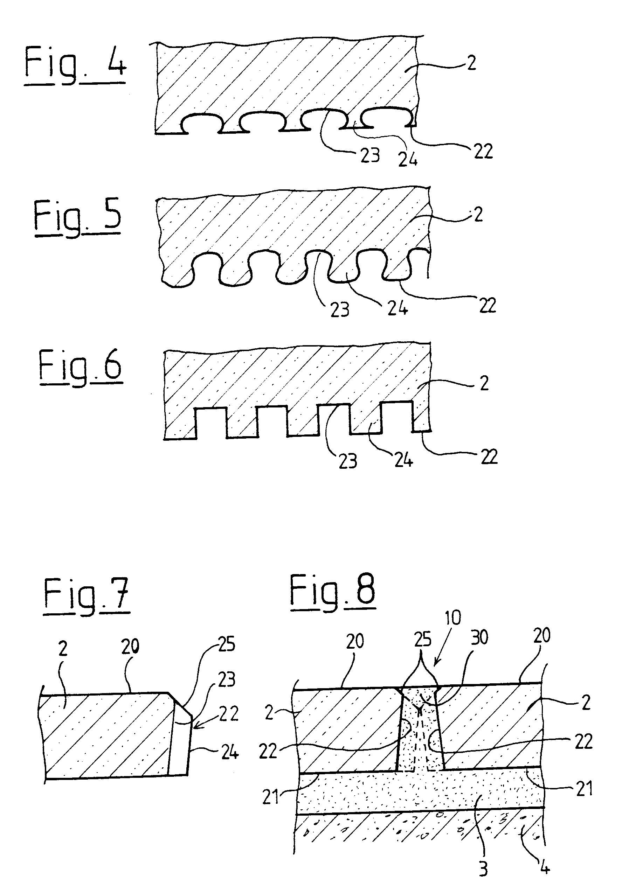

Die in den Figuren 4, 5 und 6 dargestellten unterschiedlichen Ausgestaltungen der Flanken 22 der Platten 2 stellen Alternativen zu dem vorangehend beschriebenen Schwalbenschwanz-Querschnitt der Vertiefungen 23 und Vorsprünge 24 dar. In Figur 4 sind die Vertiefungen 23 im Schnitt parallel zur hier nicht sichtbaren Oberseite 20 der Platte 2 gesehen etwa 3/4-ovalförmig oder -ellipsenförmig, wodurch die Vorsprünge 24 hier im Schnitt betrachtet eine flache, der benachbarten Platte 2 zugewandte Basis mit einem taillierten Übergang zum Inneren der Platte 2 aufweisen.

In Figur 5 ist die Flanke 22 der Platte 2 in Form einer mäandrierenden Fläche ausgebildet, wodurch sich im Schnitt betrachtet etwa pilzförmige oder keulenförmige Vertiefungen 23 und Vorsprünge 24 ergeben.

Die in Figur 6 dargestellte Platte 2 besitzt eine Flanke 22, die im Schnitt betrachtet rechteckige bzw. quadratische Vertiefungen 23 und Vorsprünge 24 aufweist.

Figur 7 zeigt besonders deutlich die Gestaltung der Platte 2 aus Figur 3 im Querschnitt durch den Bereich der geneigten Flanke 22, wobei der Schnitt genau durch eine Vertiefung 23 verläuft. Im Hintergrund ist deshalb der Vorsprung 24 in Seitenansicht erkennbar. Die Flanke 22 ist in ihrem oberen Teil mit der bereits im Zusammenhang mit Figur 3 erwähnten Fase 25 ausgebildet, die von der Oberseite 20 der Platte 2 zur Flanke 22 verläuft.

Figur 8 zeigt in einer der Figur 7 entsprechenden Darstellungsweise einen Ausschnitt aus einem Plattenbelag im Querschnitt durch den Bereich einer Fuge 10. Die beiden benachbarten, leicht konischen Platten 2 weisen mit ihren geneigten Flanken 22 aufeinander zu und schließen zwischen sich die keilförmige Fuge 10 ein. Mit ihrer Unterseite 21 liegen die Platten 2 in tragenden Unterkonstruktion, z. B. einer Betonplatte 4, ausgebracht ist.

Im oberen Bereich der Plattenflanken 22 ist wieder jeweils die Fase 25 vorhanden, die den Übergang von den Flanken 22 zu den Oberseiten 20 der beiden Platten 2 bildet. Weiterhin ist aus der Figur 8 ersichtlich, daß die Fugenfüllmasse 30 bzw. die Klebstoffmasse des Klebstoffbettes 3 die Fuge 10 vollständig und bündig mit der Oberseite 20 der beiden benachbarten Platten 2 ausfüllt. Im Zusammenwirken mit der Fase 25 wird so erreicht, daß die Strukturierung der Plattenflanken 22 an der Oberseite 20 des Plattenbelages bzw. der Platten 2 nicht in Erscheinung tritt.

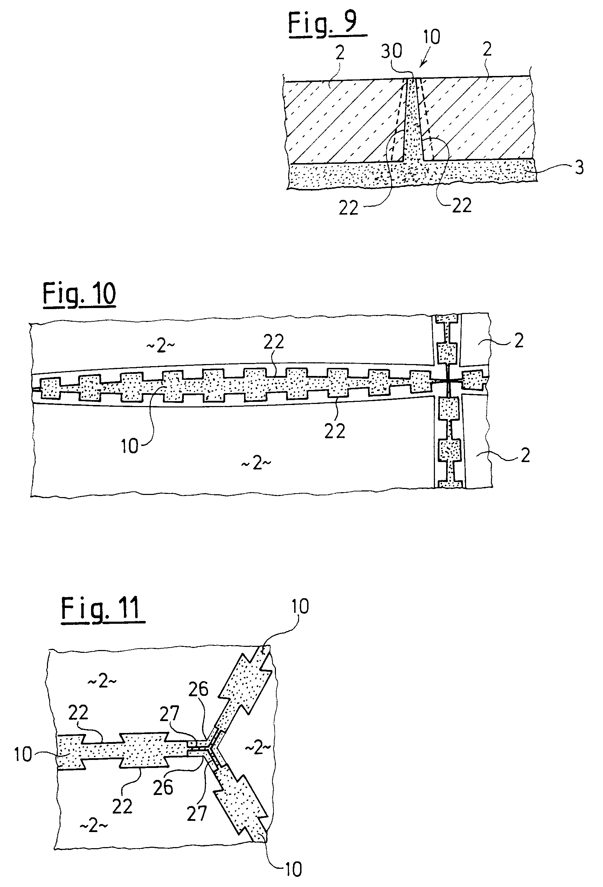

Figur 9 zeigt eine Ausführung der Platten 2 mit geneigten Plattenflanken 22. Hierdurch ergibt sich eine Fuge 10, die im Querschnitt gesehen keilförmig verläuft, und zwar von oben nach unten hin weiter wird. Diese Gestaltung der Platten bietet sich insbesondere dann an, wenn die Klebmasse 3 unter den Platten 2 zugleich auch als Fugenfüllmasse 30 dienen soll, d. h. dann, wenn ein Verfüllen der Fugen 10 von oben her nicht vorgesehen ist.

Aus dem in Figur 10 dargestellten Ausschnitt aus einem Plattenbelag, der hier in Aufsicht von oben dargestellt ist, ist eine konkave Gestaltung der Plattenflanken 22 sichtbar, wobei dem konkaven Verlauf der Plattenflanken 22 die zuvor beschriebene Strukturierung, die hier die Form von rechteckigen Vertiefungen und Vorsprüngen hat, überlagert ist. Die einzelnen Platten 2 stoßen lediglich im Bereich ihrer Ecken aneinander, während sie im übrigen Bereich ihrer Flanken 22 einen Abstand voneinander aufweisen. Hierdurch wird das fast ausschließlich noch von Hand erfolgende Verlegen der einzelnen Platten 2 zu dem Plattenbelag sehr einfach und die Füllung der Fugen 10 zwischen den einzelnen Platten 2 wird erleichtert.

Figur 11 schließlich zeigt, ebenfalls in Aufsicht auf die Oberseite, eine Ausführung des Plattenbelages, bei welchem die einzelnen Platten 2 an ihren Ecken 26 mit Vorsprüngen 27 ausgestatten sind, welche als Abstandshalter dienen. Mit diesen Vorsprüngen 27 werden dieselben Vorteile erreicht, wie mit der konkaven Form der Flanken, wie sie in Figur 10 beschrieben wurde. Wie die Figur 13 weiter zeigt, sind die Vorsprünge 27 nicht über die gesamte Höhe der Flanken 22 vorgesehen, sondern weisen eine geringere Höhe auf, so daß sie nach dem Verfüllen der Fugen 10 von oben her nicht mehr sichtbar sind. Zugleich wird somit auch im Bereich der Vorsprünge 27 ein dichter Verschluß der Fugen gewährleistet.

## Patentansprüche

1. Plattenbelag, insbesondere für eine flüssigkeitsdichte und/oder säure- bzw. laugenfeste Boden- und Wandauskleidung, bestehend aus Platten (2) mit einem mehreckigen Umriß, die jeweils eine flache Oberseite (20), eine flache oder strukturierte, in ein Klebmassebett (3) eingelegte Unterseite (21) und von der Unterseite (21) zur Oberseite (20) verlaufende Plattenflanken (22) aufweisen, wobei die Flanken (22) benachbarter Platten (2) Fugen (10) begrenzen, welche ebenfalls mit der Klebmasse (3) von unten her und/ oder mit einer eingenen Fugenfüllmasse (30) von oben her gefüllt sind, wobei die Plattenflanken (22) mit einer oberflächenvergrößernden und einen Durchtritt der Klebmasse (3) bzw. der Fugenfüllmasse (30) durch die Fuge (10) erlaubenden Strukturierung versehen sind, wobei die Strukturierung aus einer Vielzahl von direkt nebeneinander angeordneten Vertiefungen (23) bzw. Vorsprüngen (24) besteht, welche zueinander parallele, im wesentlichen senkrecht zur Längsrichtung der Flanken (22) verlaufende Längsachsen aufweisen,
dadurch gekennzeichnet,
daß die Platten (2) im Schnitt senkrecht zur Plattenebene gesehen konisch mit von unten nach oben betrachtet nach außen geneigten Flanken (22) ausgebildet sind und
daß die Vertiefungen (23) in deren Längsachse gesehen in Richtung von oben nach unten sich konisch erweiternd und die Vorsprünge (24) in derselben Richtung sich konisch verengend ausgebildet sind.

2. Plattenbelag nach Anspruch 1, dadurch gekennzeichnet, daß die Flanken (22) in ihrer Längsrichtung gesehen konkav ausgebildet sind.

3. Plattenbelag nach Anspruch 1 oder 2, dadurch gekennzeichnet, daß auf den Flanken (22) an oder neben den Plattenecken (26) Abstandshalter in Form von Vorsprüngen (27) angeordnet sind.

4. Plattenbelag nach einem der Ansprüche 1 bis 3, dadurch gekennzeichnet, daß bei den einander zugewandten Plattenflanken (22) zweier benachbarter Platten (2) jeweils eine Vertiefung (23) in der einen Flanke (22) einer Vertiefung (23) in der anderen Flanke (22) bzw. jeweils ein Vorsprung (24) in der einen Flanke (22) einem Vorsprung (24) in der anderen Flanke (22) gegenüberliegt.

5. Plattenbelag nach einem der Ansprüche 1 bis 4, dadurch gekennzeichnet, daß die Vertiefungen (23) im Schnitt parallel zur Plattenebene gesehen hinterschnitten sind.

6. Plattenbelag nach Anspruch 5, dadurch gekennzeichnet, daß die Vertiefungen (23) bzw. Vorsprünge (24) an den Plattenflanken (22) im Schnitt parallel zur Plattenoberseite (20) gesehen schwalbenschwanzförmig sind.

7. Plattenbelag nach einem der Ansprüche 1 bis 5, dadurch gekennzeichnet, daß die Vertiefungen (23) und/oder Vorsprünge (24) an den Plattenflanken (22) im Schnitt parallel zur Plattenebene gesehen halb- bis dreiviertelkreisförmig, halb- bis dreiviertelovalförmig oder halb- bis dreiviertelellipsenförmig sind.

8. Plattenbelag nach einem der Ansprüche 1 bis 4, dadurch gekennzeichnet, daß die Vertiefungen (23) und/oder Vorsprünge (24) an den Plattenflanken (22) im Schnitt parallel zur Plattenebene gesehen quadratisch oder rechteckig sind.

9. Plattenbelag nach wenigstens einem der Ansprüche 1 bis 8, dadurch gekennzeichnet, daß das Verhältnis zwischen der Länge der in der Plattenebene verlaufenden Hauptachse der Platte (2) einerseits und der Tiefe und Weite einer Vertiefung (23) in der Plattenebene bzw. der horizontalen Länge und Breite eines Vorsprungs (24) in der Plattenebene andererseits zwischen 10 : 1 und 200 : 1 beträgt.

10. Plattenbelag nach einem der Ansprüche 1 bis 9, dadurch gekennzeichnet, daß die oberen, von den Flanken (22) und der Oberseite (20) gebildeten Kanten der Platten (2) angefast ausgebildet sind, wobei die Erstreckung der Fase (25) in Plattenebene gleich der oder größer als die Tiefe der Vertiefungen (23) in Plattenebene bzw. Länge der Vorsprünge (24) in Plattenebene in den Flanken (22) ist.

11. Plattenbelag nach einem der Ansprüche 1 bis 10, dadurch gekennzeichnet, daß die Konizität der Platten (2) zwischen 1 und 5 % der Plattendicke beträgt.

## Claims

1. A slab lining, particularly for a fluid tight and/or acid or lye resistant, respectively, floor and wall lining consisting of slabs (2) with a polygonal contour each comprising a flat upper side (20), a flat or structured under side (21) embedded in a bonding agent embedding (3) and slab flanks (22) extending from the under side (21) to the upper side (20), wherein the flanks (22) of adjacent slabs (2) define joints (10) which are also filled with the bonding agent (3) from the bottom and/or filled with a separate joint filler (30) from the top, wherein the slab flanks (22) are comprised with a structure enlarging the surface and enabling the penetration of the bonding agent (3) or the joint filler (30) through the joint (10), wherein the structure consists of a plurality of recesses (23) or projections (24), respectively, arranged directly side by side and comprising longitudinal axes in parallel with each other and extending substantially vertical to the longitudinal direction of the flanks (22),
**characterized in**
that the slabs (2) are formed conical as viewed in a section vertical to the slab plane with flanks (22) inclined outwards as viewed from the bottom to the top, and
that the recesses (23) as viewed in the longitudinal axis thereof in the direction from the top to the bottom are formed conically enlarging and the projections (24) in the same direction are formed conically narrowing.

2. Slab lining according to claim 1, characterized in that the flanks (22) are formed conical as viewed in the longitudinal direction thereof.

3. Slab lining according to claim 1 or 2, characterized in that spacers in form of projections (27) are positioned at the flanks (22) at or beside the slab corners (26).

4. Slab lining according to one of the claims 1 - 3, characterized in that at the facing slab flanks (22) of two adjacent slabs (2) in each case a recess (23) in the one flank (22) is opposing a recess (23) in the other flank (22) and, respectively, a projection (24) in the one flank (22) is opposing a projection (24) in the other flank (22).

5. Slab lining according to one of the claims 1 - 4, characterized in that the recesses (23) are undercut as viewed in a section in parallel with the slab plane.

6. Slab lining according to claim 5, characterized in that the recesses (23) or projections (24), respectively, at the slab flanks (22) are dovetail shaped as viewed in a section in parallel with the slab upper side (20).

7. Slab lining according to one of the claims 1 - 5, characterized in that the recesses (23) and/or projections (24) at the slab flanks (22) are shaped in the form of a half circle to a three quarter circle, a half oval to a three quarter oval or a half ellipse to a three quarter ellipse as viewed in a section in parallel with the slab plane.

8. Slab lining according to one of the claims 1 - 4, characterized in that the recesses (23) and/or projections (24) at the slab flanks (22) are square or rectangular as viewed in a section in parallel with the slab plane.

9. Slab lining according to at least one of the claims 1 - 8, characterized in that the relation between the length of the main axis of the slab (2) extending in the slab plane thereof on the one side and the depth and width of a recess (23) in the slab plane or the horizontal length and width of a projection (24), respectively, in the slab plane on the other side is between 10:1 and 200:1.

10. Slab lining according to one of the claims 1 - 9, characterized in that the upper edges of the slabs (2) defined by the flanks (22) and the upper side (20) are chamfered wherein the extension of the chamfer (25) in the slab plane is equal to or larger than the depth of the recesses (23) in the slab plane or the length of the projections (24) in the slab plane in the flanks (22).

11. Slab lining according to one of the claims 1 - 10, characterized in that the conicality of the slabs (2) is between 1 and 5 % of the slab thickness.

## Revendications

1. Dallage, en particulier pour un revêtement de sol ou du mur étanche aux liquides et/ou résistant aux acides et à la lessive, composé de dalles (2) polygonales qui présentent une face supérieure (20) plane, une face inférieure (21) plane ou structurée insérée dans une couche de masse collante (3) et des flancs (22) s'étendant de la face inférieure (21) à la face supérieure (20), les flancs (22) de dalles (2) voisines délimitant des joints (10) qui sont remplis également avec la masse collante (3) par le bas et/ou par le haut avec une masse de remplissage (30) propre, les flancs de dalles (22) étant munis d'une struture augmentant la surface et permettant un passage de la masse collante (3) ou de la masse de remplissage (30) à travers le joint (10), la structure étant constituée d'une pluralité de creux (23) et de saillies (24) qui sont disposés directement les uns à côté des autres et présentent des axes longitudinaux parallèles qui s'étendent pour l'essentiel perpendiculairement à l'axe longitudinal des flancs (22), caractérisé en ce que les dalles (2) sont coniques, vu en coupe perpendiculairement au plan des dalles, et présentent des flancs (22) inclinés vers l'extérieur, vu de bas en haut et en ce que les creux (23) s'élargissent en forme de cône de haut en bas, vu dans la direction de leur axe longitudinal et les saillies (24) diminuent en forme de cône dans la même direction.

2. Dallage selon la revendication 1, caractérisé en ce que les flancs (22) sont concaves, vu dans leur direction longitudinale.

3. Dallage selon la revendication 1 ou 2, caractérisé en ce que des dispositifs d'espacement se présentant sous la forme de saillies (27) sont disposés sur les flancs (22), sur les coins de dalles (26) ou à proximité de ceux-ci.

4. Dallage selon l'une des revendications 1 à 3, caractérisé en ce que dans les flancs (22) tournés l'un vers l'autre de deux dalles (2) voisines, un creux (23) dans l'un des flancs (22) fait face à un creux (23) dans l'autre flanc (22) et une saillie (24) dans l'un des flancs (22) fait face à une saillie (24) dans l'autre flanc (22).

5. Dallage selon l'une des revendications 1 à 4, caractérisé en ce que les creux (23) sont contre-dépouillés, vu en coupe parallèlement au plan des dalles.

6. Dallage selon la revendication 5, caractérisé en ce que les creux (23) et les saillies (24) sur les flancs de dalles (22) sont en forme de queue d'aronde, vu en coupe parallèlement à la face supérieure (20) des dalles.

7. Dallage selon l'une des revendications 1 à 5, caractérisé en ce que les creux (23) et/ou les saillies (24) sur les flancs de dalles (22) sont, vu en coupe parallèlement au plan des dalles, à moitié voire aux trois-quarts circulaires, à moitié voire aux trois-quarts ovales ou à moitié voire aux trois-quarts elliptiques.

8. Dallage selon l'une des revendications 1 à 4, caractérisé en ce que les creux (23) et/ou les saillies (24) sur les flancs de dalles (22) sont carrés ou rectangulaires, vu en coupe parallèlement au plan des dalles.

9. Dallage selon au moins l'une des revendications 1 à 8, caractérisé en ce que le rapport entre la longueur de l'axe principal de la dalle (2) s'étendant dans le plan de la dalle d'une part, et entre la profondeur et la largeur d'un creux (23) dans le plan de dalle ou entre la longueur horizontale et la largeur d'une saillie (24) dans le plan de dalle d'autre part, représente entre 10 : 1 et 200 : 1.

10. Dallage selon l'une des revendications 1 à 9, caractérisé en ce que les arêtes supérieures des dalles (2) formées par les flancs (22) et la face supérieure (20) sont chanfreinées, le prolongement du chanfrein (25) dans le plan de la dalle étant égal ou supérieur à la profondeur des creux (23) dans le plan de la dalle ou à la longueur des saillies (24) dans le plan de la dalle dans les flancs (22).

11. Dallage selon l'une des revendications 1 à 10, caractérisé en ce que la conicité des dalles (2) représente entre 1 et 5% de l'épaisseur des dalles.
